# EUROPEAN PATENT SPECIFICATION

(11) **EP 0 754 115 B1**
(45) Date of publication and mention of the grant of the patent: **19.05.1999**
(21) Application number: 95913161.6
(22) Date of filing: 24.03.1995
(51) Int. Cl.: B29C 47/88

(54) **IMPROVEMENT IN THE PRODUCTION OF MONO- AND MULTI-LAYER THERMOPLASTIC FILMS**
VERBESSERUNG DER HERSTELLUNG VON EIN- UND MEHRSCHICHTIGEN THERMOPLASTISCHEN FOLIEN
AMELIORATION CONCERNANT LA PRODUCTION DE FILMS THERMOPLASTIQUES MONO OU MULTICOUCHES

(30) Priority: 01.04.1994 EP 94200905
(43) Date of publication of application: 22.01.1997
(73) Proprietor: Cryovac, Inc., Duncan, S.C. 29334-0464 (US)
(72) Inventor: CAVAGLIA', Giuliano, 28069 Trecate (IT); COLNAGHI, Renato Angelo, 20010 Pogliano Milanese (IT); NOVELLI, Daniele, 20017 Terrazzano-Rho (IT)
(74) Representative: Marchi, Massimo, Dr.
(86) International application number: EP9501121
(87) International publication number: WO9526867

(56) References cited:
- EP-A- 0 065 415
- WO-A-89/03294
- CH-A- 378 528
- US-A- 4 676 851
- PATENT ABSTRACTS OF JAPAN vol. 12, no. 73 (M-674) (2920) 8 March 1988 & JP,A,62 214 921 (MITSUI TOATSU CHEM.) 21 September 1987 cited in the application

## Description

### FIELD OF THE INVENTION

The present invention relates to an improvement in a process and an apparatus for the production of flat thermoplastic films, and to the new thermoformable films thus obtainable.

More particularly, the present invention relates to an improvement in the production of flat mono- and multi-layer thermoplastic films for packaging, comprising extruding a mono-or multi-layer flat thermoplastic film and cooling a surface of said film in its molten state by contact with a chill roll, characterized in that the surface of said molten film opposite to said chill roll is concurrently quenched by means of a liquid knife device capable of spouting a continuous and substantially uniform liquid knife, at a predetermined rate and temperature, on said surface opposite the chill roll so that a continuous liquid layer is formed over substantially the entire width of said surface.

### BACKGROUND OF THE INVENTION

It is well known in the art that the slow cooling of some thermoplastic films affects their optical properties; particularly, haze and gloss.

Many processes and apparatuses have been proposed so far in order to improve the cooling rate of extruded molten films.

CH-A-378 528 teaches to improve the contact of a molten film with a movable chill surface by means of a jet of gas (air knife) that impinges on substantially the entire width of the molten film in the attempt of ensuring the complete contact of the film with the chill surface This old technique, however, does not provide a significant improvement in the cooling rate.

UK-719 093 discloses a process wherein an extruded molten film passes downwards in its molten state into a pool of cooling liquid maintained in the nip formed between two contra-rotating rolls. However, the depth of the pool of liquid formed in the nip is limited by the radius of the rolls. In addition, it is almost impossible to efficiently replace the liquid in the nip with a freshly cooled liquid.

In the same document mention is made to the possible spraying of the cooling liquid on the rolls or on the molten film before the film reaches the nip and it is admitted that care must be taken to avoid marking the film by sudden contact of the molten film with droplets of liquid (lines 57 to 60). However, the document does not teach or suggest how to avoid said marking.

EP-A-0 065 415 aims to improve the cooling rate in order to increase the production capacity. The increase in the production capacity is achieved by providing a shell thickness of the casting wheel such that the maximum permanent local shell deformation of said wheel at the point where the molten polymer first contacts the wheel surface does not exceed 0.002 inches (0.051 mm) in the radial direction. Optionally, this device is provided with a plurality of nozzles capable of driving a gaseous or a liquid coolant against the outer surface of a polymer web. As shown in the drawings, the liquid coolant is sprayed onto the outer surface of a polymer web. As above, the small droplets of liquid coolant may undesirably mark the web surface.

US-A-4 676 851 discloses a process and an apparatus for differentially cooling interlocking closure films useful for making reclosable containers wherein one or more strings of closure elements are extruded upon said film web near to one of said film's edges. While the film is cooled by a jet of air (air knife), the closure elements undergo a partial cooling by means of a liquid coolant sprayed through primary cooling nozzles. Downstream from primary cooling nozzles is placed a conventional air knife for impinging gaseous coolant on integral closure web. Downstream from the air knife device the closure elements are further cooled by passing through a secondary cooling nozzle assembly located at each closure element position.

EP-A-0 482 518 discloses a process for producing a polypropylene film; this process comprises extruding a polypropylene film and introducing said film in its molten state into a slit through which cooling water is flowing. The film is then sent to a lower water bath where it is passed between two nip rolls and formed into a sheet or a film. However, the gloss of the so produced film is not satisfactory and it is improved by pressing the sheet or film on both sides thereof while heating by means of a metal belt. The pressing pressure is of at least 5 Kg/cm² and preferably from 10 to 30 Kg/cm². The heating temperature is of from 155 to 160°C. If the pressure is lower than 5 Kg/cm² and/or the temperature is lower than 155°C a sheet excellent in transparency and surface gloss cannot be obtained (pag. 4, lines 5 and 6, and lines 9 and 10).

WO-A-89 03294 discloses a method to maintain the longitudinal orientation of the molecules in a cold shrinkable product. The cooling step is performed by means of a chill roll and optional water jets. As shown in the drawings, the liquid coolant is sprayed onto the outer surface of a polymer web and the small droplets of liquid coolant mark the web surface when they are sprayed onto those portions where the temperature of polymer web is still high.

JP-A-62 214 921 discloses a process for preparing a transparent crystalline polyolefin resin sheet or film, wherein a molten crystalline polyolefin resin is extruded through a T die and cooled and solidified by a chill roll, comprising the steps of urging by an air knife the sheet extruded from the T die into close contact with the chill roll, then pressing with a touch roll the side of the sheet that is not in contact with the chill roll, and further cooling with a coolant the side of the sheet that is not in contact with the chill roll such that a frost line is formed on the sheet. The comparative experiments in the application demonstrate that haze is unsatisfactory when air knife and/or touch roll and/or coolant are not used.

### OBJECTS OF THE INVENTION

A first object of the present invention is to improve in an easy way the cooling rate in a process comprising extruding a mono- or multi-layer flat thermoplastic film and cooling a surface of said film in its molten state by contacting said surface with a chill roll.

A second object of the present invention is to provide an apparatus suitable to perform the above mentioned process.

A third object of the present invention is to improve the optical properties of mono- and multi-layer films obtained via flat extrusion or coextrusion technique.

A fourth object is to obtain thermoformable structures endowed with enhanced optical properties upon thermoforming.

These and other objects have been achieved by the process and the apparatus described hereinbelow.

### DEFINITIONS

Unless otherwise stated, in this description and in the claims, the following terms have the meanings set forth hereinbelow.

The term "film" means a flat and flexible material having a thickness of at least about 5 microns, tipically of from about 20 to about 350 microns. As used herein the term "film" is intended to mean also those flat and flexible articles otherwise known as "laminates"

The terms "skin layer" and "outer layer" mean a layer of a multilayer film which comprises a surface thereof.

The wording "highly crystalline material" means a polymer or a polymer blend comprising HDPE, LDPE, ethylene alpha-olefin copolymers, polypropylene (PP) or polypropylene copolymers, and the like. Generally, they have a crystallinity degree of about 25% or more as conventionally measured by X-rays.

The term "tie" means any inner layer of a multilayer structure whose aim is to improve adhesion between two layers, typically tie layers comprise modified polymers.

When referred to a polymer, the term "modified" means a polymer characterized by the presence of functional groups such as anhydride and carboxy groups. Typical examples of "modified" polymers are: graft copolymers of maleic acid or anhydride onto ethylene-vinyl acetate copolymers, polyethylene and ethylene/alpha-olefin copolymers, graft copolymers of fused ring carboxylic anhydrides onto polyethylene, resin mixtures of these and mixtures with polyethylene or ethylene-alpha-olefin copolymers.

The term "EVOH" means an ethylene vinyl alcohol copolymer. "EVOH" includes saponified or hydrolyzed ethylene vinyl acetate copolymers, such as a vinyl alcohol copolymer having an ethylene comonomer, and prepared by, for example, hydrolysis of vinyl acetate copolymers. The degree of hydrolysis is preferably of at least about 50% or more, most preferably at least about 85%.

The term "ethylene-vinyl acetate copolymer" (EVA) means a copolymer formed from ethylene and vinyl acetate monomers wherein the ethylene derived units in the copolymer are present in major amounts and the vinyl acetate derived units in the copolymer are present in minor amounts.

The term "ionomers" means a copolymer of ethylene with a copolymerizable ethylenically unsaturated acidic monomer, usually an ethylenically unsaturated carboxylic acid which may be di- or more basic but is generally mono-basic, for example acrylic or methacrylic acid. The term "ionomer" generally covers such polymers in their free acid form as well as their ionized form. Preferably however it is in the ionized form, the neutralizing cation being any suitable metal ion for example an alkali metal ion, zinc, or other multivalent metal ions.

The term "polyamide" means a high molecular weight polymer having amide linkages, and as used herein it refers more specifically to synthetic polyamides, either aliphatic or aromatic, either in crystalline or amorphous form. It is intended to refer to both polyamides and co-polyamides. Examplary of such polyamides are those polymers commonly referred to as e.g. nylon 6, nylon 66, nylon 6-66, nylon 610, nylon 12, nylon 69, and nylon 6-12.

The term "HDPE" means a substantially linear homopolymer of ethylene having a density of from about 0.940 to about 0.960 g/cm³.

The term "LDPE" means a highly branched homopolymer of ethylene. Low Density Poly Ethylene (LDPE) usually has a density in the range of from about 0.910 to about 0.940 g/cm³.

The term "ethylene/alpha-olefin copolymer" means a copolymer of ethylene with one or more comonomers selected from C₃ to about C₁₀ alpha-olefins. These include: heterogeneous materials such linear low density polyethylene (LLDPE), very low density polyethylene (VLDPE), ultra low density polyethylene (ULDPE); and homogeneous copolymers such as metallocene catalyzed polymers such as EXACT (TM) materials supplied by Mitsui Petrochemical Corporation. These materials generally include copolymers of ethylene with one or more comonomers selected from C₄ to C₁₀ alpha-olefins such as butene-1 (i.e. 1-butene), hexene-1, octene-1, etc. in which the molecules of the copolymers comprise long chains with relatively few side chain branches or cross-linked structures. This molecular structure is to be contrasted with conventional low or medium density polyethylenes which are more highly branched than their respective counterparts. LLDPE as used herein has a density in the range of from about 0.91 g/cc to about 0.94 g/cc. Other ethylene/alpha-olefins copolymers, such as the long chain branched homogeneous ethylene/alpha-olefin copolymers available from the Dow Chemical Company, known as AFFINITY (TM) or ENGAGE (TM) resins, are also included as another type of ethylene/alpha-olefins copolymer useful in the present invention.

The term "polypropylene" (PP) means a thermoplastic resin obtained by homopolymerisation of propylene.

The term "propylene copolymer" means a copolymer from propylene and ethylene and/or 1-butene wherein the propylene units are present in larger amounts than the ethylene or butene units.

Haze is measured according to ASTM D 1003 (method A)

Gloss is measured according to ASTM D 2457-90.

### SUMMARY OF THE INVENTION

It has now been found that the abovementioned objects are achieved with a process comprising extruding a mono- or multi-layer flat thermoplastic film and cooling a surface of said film in its molten state by contact with a chill roll, wherein the surface of said molten film opposite to said chill roll is concurrently quenched by means of a liquid knife device capable of spouting a continuous and substantially uniform liquid knife, at a predetermined rate and temperature, on said surface opposite the chill roll so that a continuous liquid layer is formed over substantially the entire width of said surface.

The preferred liquid is water.

The process of the present invention involves a single cooling step. Therefore, it can be easily performed on an industrial scale.

The optical properties, especially haze and gloss, of the thermoplastic film produced therewith are substantially improved in comparison with the film produced with the conventional flat cast prior art processes.

Said improvement is particularly appreciable in the case of films having a thickness of at least about 50 microns and comprising as a film forming polymer a highly crystalline material such as PP, HDPE, LDPE, propylene copolymers and ethylene/alpha-olefin copolymers.

It has also been found that by using the process of the present invention films having an overall thickness of at least about 50 µ made of, or comprising an outer surface thicker than about 15 µ made of a highly crystalline material, can be obtained which show unexpected favorable optical properties upon thermoforming.

Said films in fact show a remarkable improvement of the haze upon thermoforming.

When compared to the corresponding thermoformed structures made via round die extrusion followed by water quenching under analogous conditions such an improvement in haze is even more impressive and unexpected.

It is therefore a first object of the present invention to provide a process for the production of a flat mono- or multi-layer thermoplastic film for packaging, comprising extruding a mono- or multi-layer flat thermoplastic film and cooling a surface of said film in its molten state by contact with a chill roll, characterized in that the surface of said molten film opposite to said chill roll is concurrently quenched by means of a liquid knife device capable of spouting a continuous and substantially uniform liquid knife, at a predetermined rate and temperature, on said surface opposite the chill roll so that a continuous liquid layer is formed over substantially the entire width of said surface.

A second object of the present invention is to provide an apparatus for the production of a flat mono- or multi-layer thermoplastic film for packaging, comprising a flat extrusion die and a chill roll provided with an internal cooling system, characterized in that a liquid knife device is associated with said chill roll for spouting a continuous and substantially uniform liquid knife at predetermined rate and temperature, said liquid knife device being provided with a slot which has an adjustable outflow cross section and is fed with a liquid at a predetermined temperature and flow rate.

A third object of this invention is to provide a multilayer thermoformable film having an overall thickness of at least about 50 µ made of, or comprising an outer layer thicker than about 15 µ of highly crystalline material, characterized in that the haze value measured according to ASTM D-1003 (Method A) in the middle of the lower web of a thermoformed cavity 180 mm in lenght, 135 mm in width, and 50 mm in depth is lower than about 20% compared to the haze of the film before thermoforming.

A fourth object of this invention is to provide a multilayer thermoformable film having an overall thickness of at least about 50 µ made of, or comprising an outer layer thicker than about 15 µ of highly crystalline material, characterized in that the haze value measured according to ASTM D-1003 (Method A) in the middle of the lower web of a thermoformed cavity 180 mm in lenght, 135 mm in width, and 50 mm in depth is lower than about 30% compared to the haze value measured in the same thermoformed cavity when the the same film is made by coextrusion through a round die followed by quenching with water.

In the process of the present invention the polymer(s) or polymer blend(s) is (are) (co)extruded through a flat (co)extrusion die as known in the art.

The obtained film in its molten state is contacted with a chill roll and the surface of the molten film opposite to the chill roll is concurrently quenched by contact with a uniform and continuous layer of cooling liquid spouted by a suitable liquid knife device.

The chill roll is placed close to the die lips, typically at a distance of from about 0.5 to about 6 cm, and preferably at a distance of from about 1 to about 3 cm, and is provided with a conventional internal cooling system capable of keeping its outer cylindrical surface at a temperature of from about 0° to about 40°C, preferably of from about 4° to about 15°C, and most preferably of from about 6° to about 10°C. The dimensions of said chill roll can widely vary depending on the width of the desired film. Typical and more common dimensions are of from about 100 to about 300 cm in width and of from about 50 to about 100 cm in diameter.

The chill roll is driven at a predetermined speed which is of from about 10 to about 300 m/min, typically of from about 15 to about 120 m/min.

The distance between the place where the film in its molten state contacts the chill roll and the die lips is generally of from about 1 to about 6 cm, preferably of from about 1.5 to about 4 cm, and even more preferably of from about 2 to about 3 cm.

The uniform and continuous layer of cooling liquid according to the present invention is obtained by allowing the cooling liquid to flow from the slot of the liquid knife device, at a rate of from about 0.2 to about 1.2 m/s, preferably of from about 0.3 to about 1.0 m/s, and even more preferably of from about 0.4 to about 1.0 m/s. While lower flow rates cannot allow the cooling liquid layer to be uniform and continuous, higher flow rates may generate undesired turbulences.

The amount of cooling liquid outflowing from the liquid knife device per hour will depend on the selected rate, on the slot width and on the size of the slot cross-section, which may suitably vary between about 1 mm and about 5 mm, and preferably between about 1.5 and about 4 mm. It can be suitably adjusted, depending on the thickness of the extruded film and the line speed, to a flow rate of from about 0.2 to about 1.5, preferably from about 0.3 to about 1.3, and most preferably from about 0.4 to about 1.0 l/min per cm of liquid knife width.

The temperature of the cooling liquid is generally of from about 3 to about 30°C, preferably of from about 4 to about 15°C, and most preferably of from about 5 to about 10°C.

A significant advantage of the present invention is that the temperature of the chill roll and the uniform liquid knife can be carefully adjusted at low values independently of each other in view of the structure of the molten film.

In the process of the present invention the liquid knife device is adjusted so that the uniform and continuous layer of cooling liquid first contacts the film at a very short distance from the die lips. In particular such a distance is preferably lower than about 14 cm, more preferably lower than about 12 cm, and even more preferably lower than about 11 cm.

Because of the short distance between the die lips and the line where the continuous liquid layer first contacts the film, no prior blowing of air is needed or advantageous.

Indeed, the cooling step of the present invention is so effective that no air impingement (air knife) or touch roll is required to improve the cooling rate.

The width of the slot of the liquid knife device is adjusted to match with substantially the entire width of the film to be extruded as the optical properties will improve only in those parts of the film which will be in contact with the cooling liquid layer spouted from the liquid knife device.

Indeed, in order to avoid water droplets on the revolving chill roll which can cause spots on the film when it first contacts the chill roll while in the molten state, it is preferable that the width of the liquid layer contacting the film is sligthly less than the width of the film itself. The film edges which are not quenched by the liquid knife will then be trimmed off and optionally recycled.

As mentioned above the liquid knife device according to the present invention has an adjustable outflow cross section and is fed with a liquid at a predetermined temperature and flow rate.

Preferably said slot is connected through feeding holes to an evening chamber, in turn connected through distribution holes to at least an equalization chamber fed with the cooling liquid by a pump.

The angle of incidence of the liquid knife with respect to the film may vary from about 20° to about 80°.

According to a preferred embodiment of the invention, said liquid knife device is operatively connected to adjustment means for adjusting height, distance and angle of incidence of said liquid knife with respect to the film in order to optimize quenching of the film depending on factors such as line (film) speed, film thickness, nature of film and of layer materials, and the like.

The process of the present invention can be applied to the manufacture of any type of mono- and multilayer structure. Prefered structures are however those comprising a highly crystalline material as the improvement in optical properties with respect to the same structures when obtained by conventional flat cast coextrusion processes will be more important.

Preferably, the layer comprising a highly crystalline material is a skin layer and the extrusion is carried out in such a way that said skin layer is in direct contact with the liquid knife. Preferably said skin layer comprises HDPE and even more preferably polypropylene.

Multilayer structures which can be advantageously manufactured according to the process of the present invention are for instance those described in EP-A-243,510, EP-A-343,877 and US-A-4,735,855.

Specific examples are:
LDPE/Tie/EVOH/Tie/HDPE,
Ionomer/LDPE/Tie/EVOH/Tie/LDPE/HDPE,
Ionomer/EVA/Ionomer/Tie/EVOH/Tie/Ionomer/HDPE,
PP/Tie/PA/EVOH/PA/Tie/LLDPE,
PP/Tie/PA/EVOH/PA/Tie/Ionomer,
PP/Tie/PA/Tie/PA/Tie/LLDPE,
PP/Tie/PA/Tie/PA/Tie/Ionomer,
PA/Tie/PA/EVOH/PA/Tie/LLDPE, and
PA/Tie/PA/EVOH/PA/Tie/Ionomer,

Typical examples of preferred structure are
PP/Tie/PA/Tie/PA/Tie/LLDPE with a nominal thickness of about 150 µ, and a PP layer thickness of about 29 µ;
PP/Tie/PA/Tie/PA/Tie/LLDPE with a nominal thickness of about 205 µ, and a PP layer thickness of about 41 µ;
PP/Tie/PA/EVOH/PA/Tie/LLDPE with a nominal thickness of about 125 µ, and a PP layer thickness of about 25 µ;
PP/Tie/PA/EVOH/PA/Tie/LLDPE with a nominal thickness of about 180 µ, and a PP layer thickness of about 36 µ;
PP/Tie/PA/EVOH/PA/Tie/Ionomer with a nominal thickness of about 90 µ, and a PP layer thickness of about 17 µ;
PP/Tie/PA/EVOH/PA/Tie/Ionomer with a nominal thickness of about 205 µ, and a PP layer thickness of about 41 µ;
PP/Tie/EVOH/PA/Tie/LLDPE with a nominal thickness of about 180 µ, and a PP layer thickness of about 36 µ;
PP/Tie/PA/Tie/LLDPE with nominal thickness of about 150, 205 and 255 µ, and PP layer thickness of about 29, 41 and 51 µ.

In particular when the process according to the present invention is used for the manufacture of a film having an overall thickness of at least about 50 µm, made of or comprising an outer layer thicker than about 15 µ of a highly crystalline polymer, the product thus obtained shows an improvement of the haze upon thermoforming which has not been attained before via the conventional flat cast coextrusion processes and not even via the round die coextrusion process followed by water quenching.

In fact, it has been found that when a cavity of 180 mm in lenght, 135 mm in width and 50 mm in depth is formed in such a film by conventional thermoforming and haze is measured according to ASTM D-1003 (Method A) in the middle of the bottom web, an improvement of at least about 20% is obtained with respect to the haze of the film before thermoforming while with the same structure obtained by the conventional round die extrusion followed by water quenching under very similar conditions such an improvement has not been achieved.

Furthermore it has also been found that by comparing the haze of the two thermoformable structures an improvement in the haze of more than about 30% is shown by the film obtained via the process of the present invention compared to that obtained via round die extrusion.

Preferably, the overall thickness of said multilayer thermoformable film is of at least about 100 µ, even more preferably is of at least about 150 µ.

Preferably the thickness of the outer layer made of a highly crystalline material is of at least about 20 µ, even more preferably is of at least about 25 µ.

Apart from an outer layer, a highly crystalline polymer may be present in the second outer layer and/or in one or more inner layers as well.

### BRIEF DESCRIPTION OF DRAWINGS

- Fig. 1: is a schematic right side view of a liquid knife device according to the invention;
- Fig. 2: is a partial enlarged view of the apparatus of Fig. 1;
- Fig. 3: is a partial top view of the apparatus of Fig. 2;
- Fig. 4: is a partially sectioned enlarged view of a liquid knife device of the apparatus of Fig. 3;
- Fig. 5: is a front view of the liquid knife device of Fig. 4;
- Fig. 6: is an enlarged view taken along the plane VI-VI of Fig. 5;
- Fig. 7: is a diagram laid out by finite element simulation which shows the variations of temperature versus time for different values of ratios of predetermined coordinate thicknesses to total thickness of a thermoplastic film produced with the apparatus of Fig. 1.

### DESCRIPTION OF THE PREFERRED EMBODIMENTS

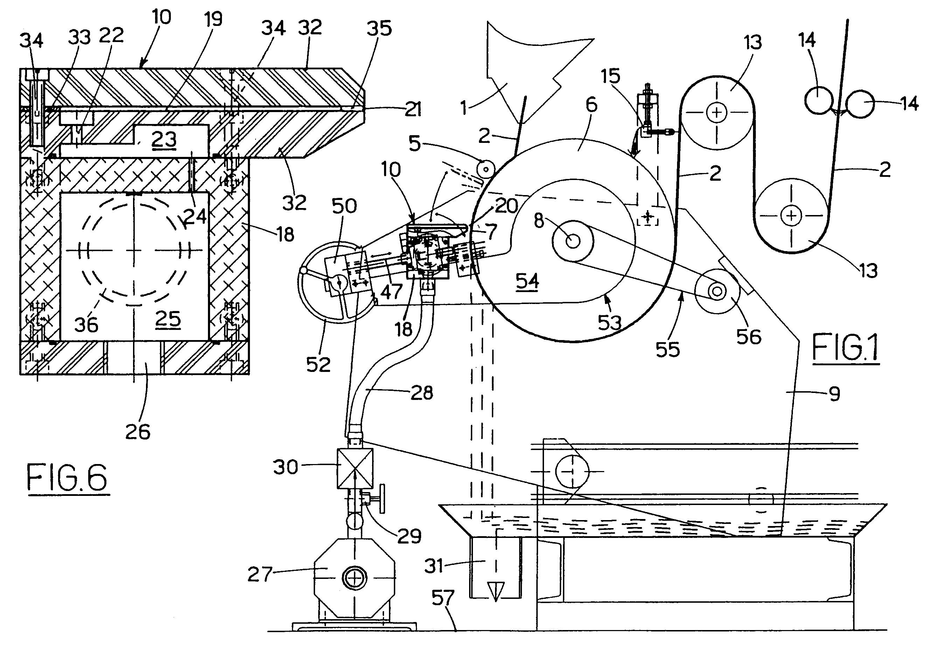

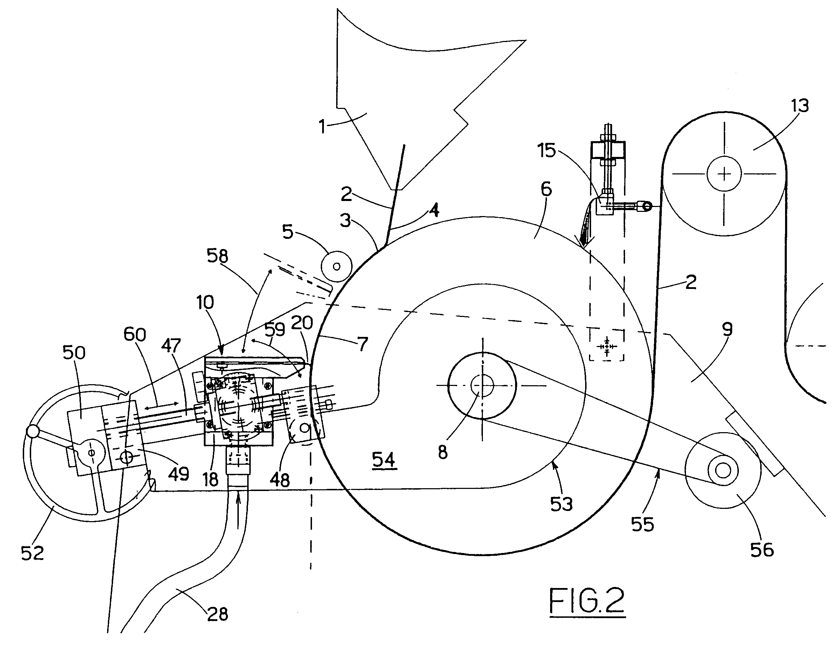

Figs. 1 and 2 show an apparatus according to this invention.

The apparatus comprises a flat extrusion, or co-extrusion, die 1 capable of forming a mono- or multi-layer thermoplastic molten film 2 at a temperature of from about 170° to about 280°C, tipically from about 180° to about 240°C. An example of a suitable die is disclosed by US-A-5 020 984.

An edge keeper 5 aims to keep down the edge of the film.

At a distance of from about 1 to about 6 cm below the extrusion die 1 there is a chill roll 6 provided with a conventional internal water cooling system (not shown) capable of keeping its outer cilyndrical surface 7 at a temperature of from about 0° to about 40°C, tipically at from about 6° to about 10°C.

The chill roll 6 is driven at a predetermined speed of from about 10 m/min to about 300 m/min, typically of from about 15 to about 120 m/min, by means of a shaft 8 and a gearmotor (not shown) housed in a box 38 which is fixed to a base 9.

The internal surface 4 of the molten film 2 exiting the extrusion die 1 contacts the outer cilyndrical surface 7 of the chill roll 6.

At a distance of from about 8 to about 12 cm below the extrusion die 1, a liquid knife device 10 is associated with the chill roll 6 for quenching the external surface 3 while the outer cilyndrical surface 7 of chill roll 6 concurrently cools the internal surface 4 of the molten film 2.

The quenching liquid flows along a descendant portion of the external surface 3 of the film 2 and drops into a tank 31.

When leaves the chill roll 6, the cooled film 2 winds onto rollers 13, then it is dried on both sides by means of air driers 14 and it is conveyed to a conventional winding system (not shown).

Air driers 15 dry the surface 7 of the chill roll 6 in order to remove some fews droplets of liquid remaining on said surface 7, thus avoiding marking the film by sudden contact of the molten film 2 with said droplets.

The liquid knife device 10 comprises a body 18 provided with a slot 19 which spouts a continuous and substantially uniform liquid knife 20 on the external surface 3 of the molten film 2.

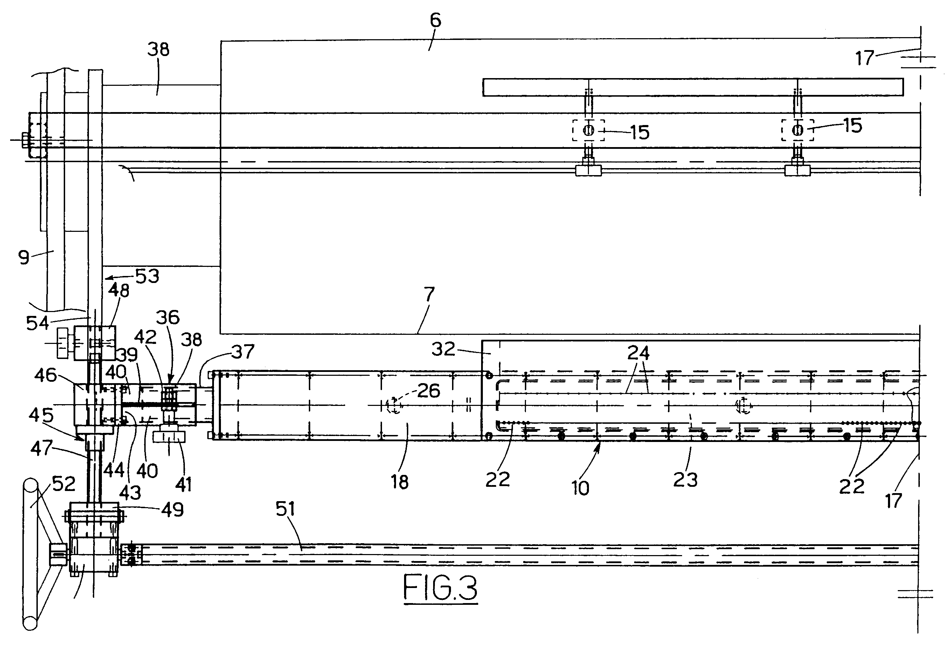

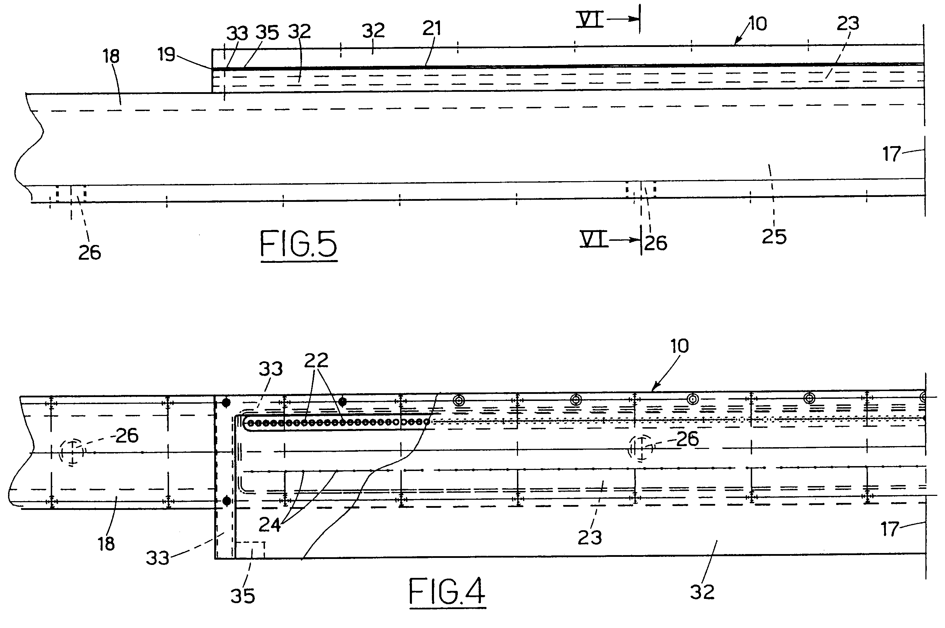

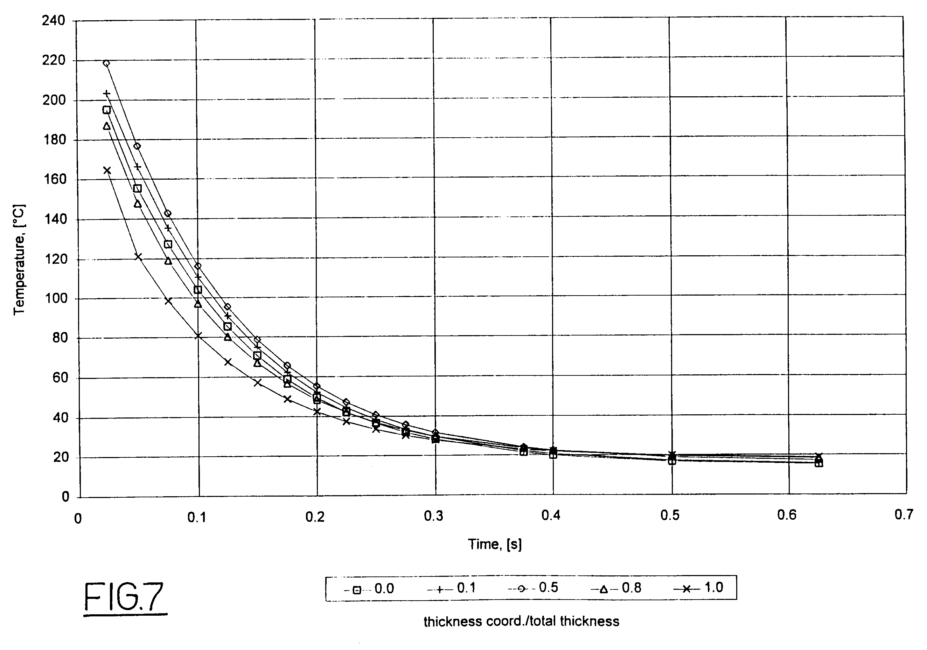

Figs. 3, 4 and 5 show only the left half of the apparatus of the invention and of the body 18, the right half being symmetrical with respect to a transversal center line 17.

The quenching liquid is supplied to the slot 19 by means of feeding holes 22, an evening chamber 23, distribution holes 24, plenum chambers 25 and inlet ports 26 connected to a centrifugal pump 27. The latter feeds the quenching liquid through a flexible delivery duct 28 provided with liquid flow control valve 29 and a flowmeter 30, in order to control the liquid flow rate.

The plenum chambers 25 act as equalization chambers and the size of the holes 24 is predetermined in order to reach an overpressure of from about 0.5 to about 0.75 bar gauge in plenum chambers 25.

The slot 19 is positioned between two plates 32 fixed at a predetermined distance by means of interposed "C" sealing gasket 33, rubber blocks 35 and stud bolts 34. The slot 19 has a frontal outflow cross-section 21 which can be adjusted by changing the thickness of the gasket 33 and the size (thickness and width) of the rubber blocks 35. Therefore, when the flow rate remains unchanged, the desired rate of the quenching liquid is obtained by changing the cross section 21. Preferably, the continuous and substantially uniform liquid knife 20 outflows from the cross section 21 at a rate of from about 0.2 to about 1.2, preferably of from about 0.3 to about 1, most preferably of from about 0.4 to about 0.6 m/sec, and at a temperature of from about 4° to about 10°C.

As shown in Fig. 6, the slot 19 has a rectilinear transversal axis.

The body 18 is operatively connected to incidence angle adjustment means 36 comprising two side hollow journals 37 integral with the body 18, said journals 37 being rotatably mounted in sleeves 38, as shown in Fig. 3. Each sleeve 38 is provided with a slit 39 whose lips 40 are clamped by means of a bolt 41 and nuts 42. A side 43 of each sleeve 38 is welded to a plate 44 for a perimetric portion so that the lips 40 are elastically yielding.

Each sleeve 38 is operatively connected to distance adjustment means 45 comprising a respective slider 46 fastened to one plate 44. The sliders 46 are driven to slide towards and away from the chill roll 6 by means of threaded rods 47 and respective worm screws and helical gears connected to a hand wheel 52. Each worm screw and helical gear is housed in a box 50 and left and right helical gears are operatively connected by means of a hollow rod 51. The rods 47 are rotatably mounted in rests 48 and 49 which are fastened to height adjustment means 53 comprising lateral jaws 54. The rests 49 are releasably fixed to jaws 54 to allow movements of the body 18 for purposes of maintainance of the slot 19.

The jaws 54 are rotatably mounted in journals (not shown) which are coaxial with the shaft 10 of the chill roll 6. The jaws 54 are operatively connected to a gearmotor 56 by means of a belt transmion 55.

By rotating the jaws 54 through the gearmotor 55, the height of liquid knife 20 is adjusted wih respect to a ground line 57, as shown by means of arrows 58, so that the heigth position of the point of first contact of the liquid knife 20 with the molten film 2 is changed as needed, while keeping constant the distance of the cross section 21 from the molten film 2.

In Figs. 1 and 2 the upper position of the liquid knife device 10 is shown with hatched lines.

By loosening the nuts 42, the journals 37 of the body 18 are free to rotate in the sleeves 38, so that the inclination angle of the liquid knife 20 with respect to a predetermined radius of the chill roll 6 and, therefore, the incidence angle of the liquid knife 20 with respect to the film 2 is hand adjusted. Said incidence angle, shown by arrows 59, ranges from about 20° to about 80° and is preferably higher than about 30°.

By rotating the hand wheel 52, the rod 47 rotates and makes the sliders 46 to move towards and away from the film 2 for adjusting the distance of the liquid knife 20 with respect to the film 2, as shown by arrows 60. Said distance ranges from about 10 to about 40 mm, and preferably from about 20 to about 25 mm.

Therefore, independent adjustments of the distance, angle of incidence and heigth of the liquid knife device 20 are allowed to optimize quenching of the film 2 depending on factors such as the film speed (which may be related to the chill roll speed as already described); film thickness; type of film and layer materials; and so forth.

These parameters are mutually interdependent, and together or individually can be adjusted as is needed to substantially maintain the continuous liquid layer and cooling rate needed for the application.

As shown in the diagramm of Fig. 7, the estimated total time of the quenching step is of about 0.6 sec.

The following examples illustrate this invention.

### EXAMPLES 1 to 4

A monolayer film was produced on an apparatus such as that illustrated in the Figures and described above by extruding the polymer through a flat cast extrusion die, contacting the film in its molten state with a chill roll 700 mm in diameter and 1300 in width, at a distance of about 15 mm from the die slot, quenching it by means of a water knife device of this invention located at a distance of about 20 mm from the film surface and of about 100 mm from the die slot and inclined with an impact angle, measured with respect to the chill roll radius, of about 40°.

The quenched film, after the water flow breakaway, followed the chill roll till the end of the wrapping angle and then was dried by a doubled-sided air drier while travelling towards a conventional winding system.

A sample of the thus obtained film was collected and % haze and gloss were measured according to the aforementioned ASTM methods.

Polymers, operational conditions and optical properties of the films are shown in Tables I and II.

### EXAMPLES 5 to 8

Four thermoformable multilayer structures
A/B/C/D/C/E/F
have been manufactured by coextrusion according to this invention under the conditions mentioned in Table III below.

The outer layer F was in contact with the water knife.

The nature of the polymers A to F, the overall thickness and the partial thickness of the F layer were as mentioned in the following.

### Ex. 5

A = Ethylene-octene copolymer (d = about 0.915 g/cc)
B = modified LDPE based adhesive
C = Nylon 6
D = EVOH
E = modified PP based adhesive
F = PP
Overall thickness = about 180 µ; thickness of the F layer = about 36 µ

### Ex. 6

A = Ethylene-octene copolymer (d = about 0.915 g/cc)
B = modified LDPE based adhesive
C = Nylon 6
D = modified LDPE based adhesive
E = modified PP based adhesive
F = PP
Overall thickness = about 255 u; thickness of the F layer = about 51 µ

### Ex. 7

A = Ethylene-octene copolymer (d = about 0.915 g/cc)
B = modified LDPE based adhesive
C = Nylon 6
D = modified LDPE based adhesive
E = modified PP based adhesive
F = PP
Overall thickness = about 205 µ; thickness of the F layer = about 41 µ

### Ex. 8

A = Ethylene-octene copolymer (d = about 0.915 g/cc)
B = modified LDPE based adhesive
C = Nylon 6
D = modified LDPE based adhesive
E = modified PP based adhesive
F = PP
Overall thickness = about 150 µ; thickness of the F layer = about 29 µ

Films 5 to 8 were thermoformed according to Example 12. Their optical properties before and after thermoformation are shown in Table IV.

### EXAMPLES 9 and 10

Two multilayer structures
A/B/C/D/C/B/E
were manufactured by coextrusion according to this invention under the conditions mentioned in Table V below.

The outer layer E was in contact with the water knife.

The nature of the polymers A to E, the overall thickness and the partial thickness of the E layer were as mentioned in the following.

### Ex. 9

A = Ionomer (Zn salt)
B = LDPE (d = about 0.925 g/cc)
C = modified LDPE based adhesive
D = EVOH
E = HDPE (d = about 0.96 g/cc)
Overall thickness = about 75 µ; thickness of E layer = about 7.5 µ

### Ex. 10

A = LDPE (d = about 0.915 g/cc)
B = EVA (18% VA)
C = modified LLDPE based adhesive
D = EVOH
E = HDPE (d = about = 0.96 g/cc)
Overall thickness = about 150 u; thickness of E layer = about 18 µ

The optical properties of the films are shown in Table V.

### EXAMPLE 11

A multilayer structure
A/B/C/D/C/B/E/F
was manufactured by coextrusion according to this invention under the conditions mentioned in Table VI below.

The outer layer F was in contact with the water knife.

The nature of the polymers A to F, the overall thickness and the partial thickness of the F layer was as mentioned in the following.

### Ex. 11

A = Ionomer (Zn salt)
B = Ionomer (Na salt)
C = modified LDPE based adhesive
D = EVOH
E = EVA (18% VA)
F = HDPE (d = about 0.96 g/cc)
Overall thickness = about 130 µ; thickness of F layer = about 15 µ

The optical properties of this film are shown in Table V.

### COMPARATIVE EXAMPLES A to D

Four films were extruded with the same polimers as in the foregoing Examples 1 to 4 with the only difference that a conventional air knife operating at room temperature was used in lieu of the water knife of this invention.

The remaining operational conditions were the same as in the foregoing Examples 1 to 4.

The optical properties of the thus obtained films are shown in Tables I and II.

The tests show that haze and gloss in Example 1 to 4 were substantially improved using the water knife of the invention as compared to the Examples A to D using a conventional air knife.

### COMPARATIVE EXAMPLES E to H

Comparative films of Examples E to H, having exactly the same structure as those of Examples 5 to 8, have been prepared by coextrusion through a round die at a die temperature corresponding to that indicated in Table III followed by a quenching step with water at a temperature corresponding to that indicated in Table III.

Comparative films E to H were thermoformed according to Example 12. Their optical properties before and after thermoformation are shown in Table IV.

### COMPARATIVE EXAMPLES I and J

Comparative films of Examples K and J, having exactly the same structure as those of Examples 9 and 10, have been prepared as in the foregoing Examples 9 and 10 with the only difference that a conventional air knife operating at room temperature was used in lieu of the water knife of this invention.

The remaining operational conditions were the same as in the foregoing Examples 9 and 10.

The optical properties of the thus obtained films are shown in Table V.

The tests show that haze and gloss in Example 9 and 10 were substantially improved using the water knife of the present invention as compared to the Examples K and J using a conventional air knife.

### COMPARATIVE EXAMPLE I

Comparative film of Example I, having exactly the same structure as those of Example 11, has been prepared as in the foregoing Example 11 with the only difference that a conventional air knife operating at room temperature was used in lieu of the water knife of this invention.

The remaining operational conditions were the same as in the foregoing Example 11.

The optical properties of the thus obtained film are shown in Table VI.

The tests show that haze and gloss in Example 11 were substantially improved using the water knife of the present invention as compared to the Example I using a conventional air knife.

### EXAMPLE 12

### Thermoformation

The thermoforming step has been carried out on a Tiromat VA 420 machine, using air plus vacuum as the forming system. The cavity size was 180 mm in length, 135 mm in width, and 50 mm in depth. The heating time was 3s, while the forming time was 4s.

After thermoforming the haze has been measured, by ASTM D-1003 (method A), in the area in the middle of the bottom thermoformed webs.

The heating temperature, as well as the haze value before and after thermoforming (TF) and the % improvement in haze upon thermoforming, are indicated for each structure in Table IV below. The values reported there are the average of the readings on at least 8 different samples.

Table IV shows that haze values of the films 5 to 8 of this invention are substantially improved as compared with the conventional films E to H.

**TABLE I**

| | Example 1 | Compar. Example A | Example 2 | Compar. Example B |
|---|---|---|---|---|
| Polymer | HDPE (1) | HDPE (1) | PP (2) | PP (2) |
| Film Thickness (µ) | 200 | 200 | 50 | 50 |
| Extrusion Temperature (°C) | 220-240 | 220-240 | 180-230 | 180-230 |
| Die Temperature (°C) | 245 | 245 | 235 | 235 |
| Feedblock Temperature (°C) | 240 | 240 | 230 | 230 |
| Chill roll Temperature (°C) | 6.5 | 6.5 | 8 | 8 |
| Chill roll Speed (m/min) | 17.2 | 17.2 | 44.4 | 44.4 |
| Water Knife Temperature (°C) | 7 | === | 7 | === |
| Throughput l/min per 1 cm liquid knife width | 0.67 | === | 0.67 | === |
| Haze % | 33 | 64 | 2.5 | 3.7 |
| Gloss Unit | 70 | === | 124 | 117 |

| | | | | |
|---|---|---|---|---|
| (1) d = about 0.97 g/cm³, MFI = about 6.8 dg/min | | | | |
| (2) d = about 0.90 g/cm³, MFI = about 33 dg/min | | | | |

**TABLE II**

| | Example 3 | Compar. Example C | Example 4 | Compar. Example D |
|---|---|---|---|---|
| Polymer | PP (3) | PP (3) | LDPE (4) | LDPE (4) |
| Film Thickness (µ) | 200 | 200 | 200 | 200 |
| Extrusion Temperature (°C) | 180-230 | 180-230 | 180-230 | 180-230 |
| Die Temperature (°C) | 235 | 235 | 230 | 230 |
| Feedblock Temperature (°C) | 230 | 230 | 220 | 220 |
| Chill roll Temperature (°C) | 8 | 8 | 6.5 | 6.5 |
| Chill roll Speed (m/min) | 15.7 | 15.7 | 17.2 | 17.2 |
| Water Knife Temperature (°C) | 7 | === | 6.5 | === |
| Throughput l/min per 1 cm liquid knife width | 0.67 | === | 0.67 | === |
| Haze % | 9 | 21 | 4.5 | 6.5 |
| Gloss Unit | 97 | 90 | 99 | 96 |

| | | | | |
|---|---|---|---|---|
| (3) d = about 0.90 g/cm³, MFI = about 33 dg/min | | | | |
| (4) d = about 0.92 g/cm³, MFI = about 2 dg/min | | | | |

**TABLE III**

| | Example 5 | Example 6 | Example 7 | Example 8 |
|---|---|---|---|---|
| Die Temperature (°C) | 255 | 240 | 255 | 255 |
| Feedblock Temperature (°C) | 250 | 235 | 250 | 250 |
| Chill roll Temperature (°C) | 8.2 | 7.6 | 7.8 | 7.8 |
| Chill roll Speed (m/min) | 24 | 15 | 23 | 31 |
| Water Knife Temperature (°C) | 9 | 9 | 9 | 9 |
| Water Knife Throughput m³/h | 5.5 | 6.1 | 5.2 | 5.2 |
| l/min per 1 cm liquid knife width | 0.8 | 0.9 | 0.75 | 0.75 |

**TABLE IV**

| Structure of Example | Heating Temper. (°C) | Before TF | After TF | Reduction (%) |
|---|---|---|---|---|
| 5 | 70 | 2.9 | 2.3 | + 21 |
| Comparative E | 70 | 8.1 | 7.4 | + 9 |
| 6 | 80 | 6.7 | 4.2 | + 37 |
| Comparative F | 80 | 7.8 | 6.6 | + 15 |
| 7 | 75 | 4.3 | 3.4 | + 20 |
| Comparative G | 75 | 4.9 | 6.0 | - 22 |
| 8 | 70 | 2.7 | 2.1 | + 22 |
| Comparative H | 70 | 2.8 | 4.2 | - 50 |

**TABLE V**

| | Example 9 | Compar. Example K | Example 10 | Compar. Example J |
|---|---|---|---|---|
| Die Temperature (°C) | 230 | 230 | 230 | 230 |
| Feedblock Temperature (°C) | 220 | 220 | 220 | 220 |
| Chill roll Temperature (°C) | 7 | 7 | 7 | 7 |
| Chill roll Speed (m/min) | 51 | 51 | 21 | 21 |
| Water Knife Temperature (°C) | 9 | === | 9 | === |
| Throughput l/min per 1 cm liquid knife width | 0.55 | === | 0.55 | === |
| Haze % | 6 | 10 | 14 | 22 |
| Gloss Unit | 110 | 109 | 92 | 79 |

**TABLE VI**

| | Example 11 | Compar. Example I |
|---|---|---|
| Die Temperature (°C) | 240 | 240 |
| Feedblock Temperature (°C) | 230 | 230 |
| Chill roll Temperature (°C) | 7 | 7 |
| Chill roll Speed (m/min) | 31 | 31 |
| Water Knife Temperature (°C) | 9 | === |
| Throughput l/min per 1 cm liquid knife width | 0.55 | === |
| Haze % | 4 | 14 |
| Gloss Unit | 129 | 103 |

## Claims

1. A process for the production of a flat mono- or multi-layer thermoplastic film for packaging, comprising extruding a mono- or multi-layer flat thermoplastic film (2) and cooling a surface (4) of said film in its molten state by contact with a chill roll (6), characterized in that the surface (3) of said molten film (2) opposite to said chill roll (6) is concurrently quenched by means of a liquid knife device (10) capable of spouting a continuous and substantially uniform liquid knife (20), at a predetermined speed and temperature, on said surface (3) opposite the chill roll (6) so that a continuous liquid layer is formed over substantially the entire width of said surface.

2. A process according to claim 1, characterized in that the said liquid is water.

3. A process according to claim 1 or 2, characterized in that said film (2) has a thickness of at least about 50 microns.

4. A process according to any of claims from 1 to 3, characterized in that said film (2) comprises a film forming polymer selected from the group comprising PP, HDPE, LDPE, propylene copolymers and ethylene/alpha-olefin copolymers.

5. A process according to any of claims from 1 to 4, characterized in that the temperature of said chill roll (6) is of from about 0° to about 40°C.

6. A process according to claim 5, characterized in that the temperature of the chill roll (6) is of from about 4° to about 15°C.

7. A process according to claim 6, characterized in that the temperature of the chill roll (6) is of from about 6° to about 10°C.

8. A process according to any of claims from 1 to 7, characterized in that the temperature of the continuous and substantially uniform liquid knife (20) is of from about 3° to about 30°C.

9. A process according to claim 8, characterized in that the temperature of the liquid knife (20) is of from about 4° to about 15°C.

10. A process according to claim 9, characterized in that the temperature of the liquid knife (20) is of from about 5° to about 10°C.

11. A process according to any of claims from 1 to 10, characterized in that the chill roll (6) is driven at a speed of from about 10 m/min to about 300 m/min.

12. A process according to any of claims from 1 to 11, characterized in that the flow rate of the liquid knife (20) is of from about 0.2 to about 1.2 m/sec.

13. A process according to claim 12, characterized in that the flow rate of the liquid knife (20) is of from about 0.3 to about 1 m/sec.

14. A process according to claim 12, characterized in that the flow rate of the liquid knife (20) is of from about 0.4 to about 0.6 m/sec.

15. A process according to any of claims from 1 to 14, characterized in that the liquid knife throughput is of from about 0.2 to about 1.5 l/min per cm of liquid knife width.

16. A process according to claim 15, characterized in that the liquid knife throughput is of from about 0.3 to about 1.3 l/min per cm of liquid knife width.

17. A process according to claim 15, characterized in that the liquid knife throughput is of from about 0.4 to about 1 l/min per cm of liquid knife width.

18. A process according to any of claims from 1 to 17, characterized in that the incidence angle of said liquid knife device (20) with respect to said film (2) is of from about 20° to about 80°.

19. A process according to any of claims from 1 to 18, characterized in that the distance from the lips of the die (1) to the place where the uniform and continuous layer of cooling liquid first contacts the film (2) is lower than about 14 cm.

20. A flat mono- or multi-layer thermoplastic film for packaging whenever obtained by the process of any of claims 1 to 19.

21. An apparatus for the production of a flat mono- or multi-layer thermoplastic film (2) for packaging, comprising a flat extrusion die (1) and a chill roll (6) provided with an internal cooling system, characterized in that a liquid knife device (10) is associated with said chill roll (6) for spouting a continuous and substantially uniform liquid knife (20) at a predetermined speed and temperature, said liquid knife device (10) being provided with a slot (19) which has an adjustable outflow cross section (21) and is fed with a liquid at a predetermined temperature and flow rate.

22. An apparatus according to claim 21, characterized in that said slot (19) is connected through feeding holes (22) to an evening chamber (23), in turn connected through distribution holes (24) to equalization chambers (25) fed with a liquid by a pump (27).

23. An apparatus according to claim 22, characterized in that said slot (19) is comprised between two plates (32) fixed at predetermined distance by means of interposed "C" sealing gasket (33), rubber blocks (35) and stud bolts (34) for adjusting a frontal outflow cross-section (21) by changing the thickness of said gasket (33) and the size of said blocks (35).

24. An apparatus according to claim 21, characterized in that said liquid knife device (10) is operatively connected to ajustment means (36; 45; 53) for adjusting incidence angle, distance and heigth of said liquid knife (20) with respect to said film (2).

25. An apparatus according to claim 24, characterized in that said incidence angle ajustment means (36) comprise two side hollow journals (37) integral with said body (18), which are rotatably mounted in sleeves (38) provided with a slit (39) whose lips (40) are clamped by means of a bolt and nuts (41, 42).

26. An apparatus according to claims 24 and 25, characterized in that said distance ajustment means (45) comprise sliders (46) each fastened to a sleeve (38), said sliders (46) being driven to slide towards and away from said film (2) by means of threaded rods (47) rotatably mounted in rests (48, 49) and respective worm screws and helical gears connected to a hand wheel (52).

27. An apparatus according to any of claims from 24 to 26, characterized in that said height ajustment means (53) comprises lateral jaws (54) to which said rests (48, 49) are fastened, said jaws (54) being rotatably mounted in journals coaxial with a shaft (10) of said chill roll 6 and being operatively connected to a gearmotor (56) by means of a belt transmission (55).

28. A multilayer thermoformable film having an overall thickness of at least about 50 µ made of, or comprising an outer layer thicker than about 15 µ of highly crystalline material, characterized in that the haze value measured according to ASTM D-1003 (Method A) in the middle of the lower web of a thermoformed cavity 180 mm in lenght, 135 mm in width, and 50 mm in depth is lower than about 20% compared to the haze of the film before thermoforming.

29. A multilayer thermoformable film according to claim 28, characterized in that it has an overall thickness of at least about 100 µ.

30. A multilayer thermoformable film according to claim 28, characterized in that it has an overall thickness of at least about 150 µ.

31. A multilayer thermoformable film according to claim 28, characterized in that the thickness of the outer layer made of highly crystalline material is of at least about 20 µ.

32. A multilayer thermoformable film according to claim 28, characterized in that the thickness of the outer layer made of highly crystalline material is of at least about 25 µ.

33. A multilayer thermoformable film according to claim 28, characterized in that a highly crystalline material is present in the second outer layer as well.

34. A multilayer thermoformable film according to claim 28, characterized in that a highly crystalline material is present in one inner layer as well.

35. A multilayer thermoformable film according to claim 28, characterized in that a highly crystalline material is present in more than one inner layer as well.

36. A multilayer thermoformable film according to claim 28, characterized in that the highly crystalline material is selected from the group comprising PP, HDPE, LDPE, propylene copolymers and ethylene/alpha-olefin copolymers.

## Patentansprüche

1. Verfahren zur Herstellung einer ein- oder mehrschichtigen thermoplastischen Flachfolie zum Verpacken, umfassend: Extrudieren einer ein- oder mehrschichtigen thermoplastischen Flachfolie (2) und Kühlen einer Oberfläche der Folie in ihrem geschmolzenen Zustand durch Kontakt mit einer Kühlwalze (6),
dadurch **gekennzeichnet,** daß
die der Kühlwalze (6) gegenüberliegende Oberfläche (3) der geschmolzenen Folie (2) gleichzeitig mittels einer Flüssigkeitsmesser-Vorrichtung (10) abgeschreckt wird, welche fähig ist, ein kontinuierliches und im wesentlichen gleichmäßiges Flüssigkeitsmesser (20) mit vorher festgelegter Geschwindigkeit und Temperatur auf die der Kühlwalze (6) gegenüberliegende Oberfläche (3) zu spritzen, so daß über praktisch der gesamten Breite der Oberfläche eine kontinuierliche Flüssigkeitsschicht ausgebildet wird.

2. Verfahren nach Anspruch 1,
dadurch **gekennzeichnet,** daß
die Flüssigkeit Wasser ist.

3. Verfahren nach Anspruch 1 oder 2,
dadurch **gekennzeichnet,** daß
die Folie (2) eine Dicke von mindestens 50 µm hat.

4. Verfahren nach einem der Ansprüche 1 bis 3,
dadurch **gekennzeichnet,** daß
die Folie (2) ein folienbildendes Polymer, das aus der Gruppe bestehend aus PP, HDPE, LDPE, Propylen-Copolymeren und Ethylen-/α-Olefin-Copolymeren ausgewählt wird, umfaßt.

5. Verfahren nach einem der Ansprüche 1 bis 4,
dadurch **gekennzeichnet,** daß
die Temperatur der Kühlwalze (6) zwischen etwa 0° und etwa 40°C liegt.

6. Verfahren nach Anspruch 5,
dadurch **gekennzeichnet,** daß
die Temperatur der Kühlwalze (6) zwischen etwa 4° und etwa 15°C liegt.

7. Verfahren nach Anspruch 6,
dadurch **gekennzeichnet,** daß
die Temperatur der Kühlwalze (6) zwischen etwa 6° und etwa 10°C liegt.

8. Verfahren nach einem der Ansprüche 1 bis 7,
dadurch **gekennzeichnet,** daß
die Temperatur des kontinuierlichen und im wesentlichen gleichmäßigen Flüssigkeitsmessers (20) zwischen etwa 3° und etwa 30°C liegt.

9. Verfahren nach Anspruch 8,
dadurch **gekennzeichnet,** daß
die Temperatur des Flüssigkeitsmessers (20) zwischen etwa 4° und etwa 15°C liegt.

10. Verfahren nach Anspruch 9,
dadurch **gekennzeichnet,** daß
das die Temperatur des Flüssigkeitsmessers zwischen etwa 5° und etwa 10°C liegt.

11. Verfahren nach einem der Ansprüche 1 bis 10,
dadurch **gekennzeichnet,** daß
die Kühlwalze (6) mit einer Geschwindigkeit von etwa 10 m/min bis etwa 300 m/min angetrieben wird.

12. Verfahren nach einem der Ansprüche 1 bis 11,
dadurch **gekennzeichnet,** daß
die Strömungsgeschwindigkeit des Flüssigkeitsmessers (20) zwischen etwa 0,2 und etwa 1,2 m/s liegt.

13. Verfahren nach Anspruch 12,
dadurch **gekennzeichnet,** daß
die Strömungsgeschwindigkeit des Flüssigkeitsmessers (20) zwischen etwa 0,3 und etwa 1 m/s liegt.

14. Verfahren nach Anspruch 12,
dadurch **gekennzeichnet,** daß
die Strömungsgeschwindigkeit des Flüssigkeitsmessers (20) zwischen etwa 0,4 und etwa 0,6 m/s liegt.

15. Verfahren nach einem der Ansprüche 1 bis 14,
dadurch **gekennzeichnet,** daß
der Flüssigkeitsmesser-Durchsatz zwischen etwa 0,2 und etwa 1,5 l/min pro cm Flüssigkeitsmesserbreite ist.

16. Verfahren nach Anspruch 15,
dadurch **gekennzeichnet,** daß
der Flüssigkeitsmesser-Durchsatz zwischen etwa 0,3 und etwa 1,3 l/min pro cm Flüssigkeitsmesserbreite ist.

17. Verfahren nach Anspruch 15,
dadurch **gekennzeichnet,** daß
der Flüssigkeitsmesser-Durchsatz zwischen etwa 0,4 und etwa 1 l/min pro cm Flüssigkeitsmesserbreite ist.

18. Verfahren nach einem der Ansprüche 1 bis 17,
dadurch **gekennzeichnet,** daß
der Einfallswinkel der Flüssigkeitsmesser-Vorrichtung (20) bezüglich der Folie (2) zwischen etwa 20° und etwa 80° liegt.

19. Verfahren nach einem der Ansprüche 1 bis 18,
dadurch **gekennzeichnet,** daß
der Abstand von den Lippen der Düse (1) zu der Stelle, an der die gleichmäßige und kontinuierliche Schicht der Kühlungsflüssigkeit erstmals die Folie (2) berührt, kleiner als etwa 14 cm ist.

20. Ein- oder mehrschichtige thermoplastische Flachfolie zum Verpacken, die durch das Verfahren nach einem der Ansprüche 1 bis 19 erhalten wird.

21. Apparatur zur Herstellung einer ein- oder mehrschichtigen thermoplastischen Flachfolie (2) zum Verpacken, umfassend eine Breitschlitzdüse (1) und eine Kühlwalze (6), die mit einem Innenkühlsystem ausgestattet ist,
dadurch **gekennzeichnet,** daß
eine Flüssigkeitsmesser-Vorrichtung (10) mit der Kühlwalze (6) zum Spritzen eines kontinuierlichen und im wesentlichen gleichmäßigen Flüssigkeitsmessers (20) mit vorher festgelegter Geschwindigkeit und Temperatur verbunden ist, wobei die Flüssigkeitsmesser-Vorrichtung (10) mit einem Schlitz (19) versehen ist, der einen einstellbaren Ausfluß-Querschnitt hat und mit einer Flüssigkeit mit vorher festgelegter Temperatur und Durchflußmenge gespeist wird.

22. Apparatur nach Anspruch 21,
dadurch **gekennzeichnet,** daß
der Schlitz (19) durch Beschickungsöffnungen (22) mit einer Ausgleichskammer (23) verbunden ist, die wiederum durch Verteilungsöffnungen (24) mit Ausgleichskammern (25) verbunden ist, welche durch eine Pumpe (27) mit Flüssigkeit gespeist werden.

23. Apparatur nach Anspruch 22,
dadurch **gekennzeichnet,** daß
der Schlitz (19) zwischen zwei Platten (32), die im bestimmtem Abstand mittels dazwischen angeordneten "C"-Dichtung (33), Kautschukblöcken (35) und Gewindebolzen (34) zur Einstellung eines frontalen Ausfluß-Querschnitts (21) durch Verändern der Dicke der Dichtung (33) und der Größe der Blöcke (35) fixiert sind, eingeschlossen ist.

24. Apparatur nach Anspruch 21,
dadurch **gekennzeichnet,** daß
die Flüssigkeitsmesser-Vorrichtung (10) betriebsbereit mit Einstellmitteln (36, 45, 53) zur Einstellung von Einfallwinkel, Abstand un Höhe des Flüssigkeitsmessers (20) bezüglich der Folie (2) verbunden ist.

25. Apparatur nach Anspruch 24,
dadurch **gekennzeichnet,** daß
das Einstellmittel für den Einfallswinkel (36) zwei seitliche hohle Zapfen (37) in den Körper (18) integriert umfaßt, die drehbar in Hülsen (38) montiert sind, welche mit einem Schlitz (39) ausgestattet sind, dessen Lippen (40) mit Hilfe eines Bolzens und Muttern (41, 42) festgeklemmt sind, umfaßt.

26. Apparatur nach Anspruch 24 und 25,
dadurch **gekennzeichnet,** daß
das Mittel zur Abstandseinstellung (45) Schieber (46) umfaßt, von denen jeder an einer Hülse (38) befestigt ist, wobei die Schieber mit Hilfe von Gewindestäben (47), die in Schlitten (48, 49) drehbar montiert sind und jeweils mit Schneckenschrauben und Schrägstirnrädern mit einem Handrad (52) verbunden sind, zum Gleiten zu der Folie (2) hin und von der Folie (2) weg bewegt werden.

27. Apparatur nach einem der Ansprüche 24 bis 26,
dadurch **gekennzeichnet,** daß
das Mittel zur Einstellung der Höhe (53) seitliche Backen (54) umfaßt, an denen die Schlitten (48, 49) befestigt sind, wobei die Backen (54) in Zapfen koaxial zu dem Schaft (10) der Kühlwalze (6) drehbar montiert sind und betriebsbereit mit einem Getriebemotor (56) mittels Riemenübertragung (55) verbunden sind.

28. Warmformbare mehrschichtige Folie mit einer Gesamtdicke von mindestens etwa 50 µm, die mit einer äußeren Schicht aus hochkristallinem Material, die dicker als etwa 15 µm ist, hergestellt ist, oder diese umfaßt,
dadurch **gekennzeichnet,** daß
der Trübungswert, gemessen nach ASTM D-1003 (Methode A) in der Mitte der unteren Bahn eines warmgeformten Vertiefung mit einer Länge von 180 mm, einer Breite von 135 mm und einer Tiefe von 50 mm im Vergleich zu dem Trübungswert der Folie vor dem Warmformen weniger als etwa 20 % ist.

29. Warmformbare mehrschichtige Folie nach Anspruch 28,
dadurch **gekennzeichnet,** daß
sie eine Gesamtdicke von mindestens etwa 100 µm hat.

30. Warmformbare mehrschichtige Folie nach Anspruch 28,
dadurch **gekennzeichnet,** daß
sie eine Gesamtdicke von mindestens etwa 150 µm hat.

31. Warmformmbare mehrschichtige Folie nach Anspruch 28,
dadurch **gekennzeichnet,** daß
die Dicke der äußeren Schicht, die aus hochkristallinem Material hergestellt ist, mindestens etwa 20 µm ist.

32. Warmformbare mehrschichtige Folie nach Anspruch 28,
dadurch **gekennzeichnet,** daß
die Dicke der äußeren Schicht, die aus hochkristallinem Material hergestellt ist, mindestens etwa 25 µm ist.

33. Warmformbare mehrschichtige Folie nach Anspruch 28,
dadurch **gekennzeichnet,** daß
auch in der zweiten äußeren Schicht hochkristallines Material vorhanden ist.

34. Warmformbare mehrschichtige Folie nach Anspruch 28,
dadurch **gekennzeichnet,** daß
auch in einer inneren Schicht hochkristallines Material vorhanden ist.

35. Warmformbare mehrschichtige Folie nach Anspruch 28,
dadurch **gekennzeichnet,** daß
das hochkristalline Material auch in mehr als einer inneren Schicht vorhanden ist.

36. Warmformbare mehrschichtige Folie nach Anspruch 28,
dadurch **gekennzeichnet,** daß
das hochkristalline Material aus der Gruppe bestehend aus PP, HDPE, LDPE, Propylen-Copolymeren und Ethylen/α-Olefin-Copolymeren ausgewählt ist.

## Revendications

1. Procédé de production d'un film thermoplastique plat monocouche ou multicouche pour l'emballage, comprenant l'extrusion d'un film thermoplastique plat monocouche ou multicouche (2) et le refroidissement d'une surface (4) du film à son état fondu par mise au contact d'un rouleau de refroidissement (6), caractérisé en ce que la surface (3) du film fondu (2) opposée au rouleau de refroidissement (6) est refroidie simultanément par un dispositif (10) à lame liquide qui peut projeter une lame liquide continue et pratiquement uniforme (20) à une vitesse et une température prédéterminées, sur cette surface (3) opposée au rouleau de refroidissement (6) afin qu'une couche liquide continue se forme pratiquement sur toute largeur de ladite surface.

2. Procédé selon la revendication 1, caractérisé en ce que le liquide est l'eau.

3. Procédé selon la revendication 1 ou 2, caractérisé en ce que le film (2) a une épaisseur d'au moins 50 µm environ.

4. Procédé selon l'une quelconque des revendications 1 à 3, caractérisé en ce que le film (2) est constitué d'un polymère filmogène choisi dans le groupe qui comprend le PP, le HDPE, le LDPE, les copolymères de propylène et les copolymères d'éthylène et d'une oléfine α.

5. Procédé selon l'une quelconque des revendications 1 à 4, caractérisé en ce que la température du rouleau de refroidissement (6) est comprise entre environ 0 et 40 °C.

6. Procédé selon la revendication 5, caractérisé en ce que la température du rouleau de refroidissement (6) est comprise entre environ 4 et 15 °C.

7. Procédé selon la revendication 6, caractérisé en ce que la température du rouleau de refroidissement (6) est comprise entre environ 6 et 10 °C.

8. Procédé selon l'une quelconque des revendications 1 à 7, caractérisé en ce que la température de la lame liquide continue et pratiquement uniforme (20) est comprise entre environ 3 et 30 °C.

9. Procédé selon la revendication 8, caractérisé en ce que la température de la lame liquide (20) est comprise entre environ 4 et 15 °C.

10. Procédé selon la revendication 9, caractérisé en ce que la température de la lame liquide (20) est comprise entre environ 5 et 10 °C.

11. Procédé selon l'une quelconque des revendications 1 à 10, caractérisé en ce que le rouleau de refroidissement (6) est entraîné à une vitesse comprise entre environ 10 et 300 m/min.

12. Procédé selon l'une quelconque des revendications 1 à 11, caractérisé en ce que la vitesse d'écoulement de la lame liquide (20) est comprise entre environ 0,2 et 1,2 m/s.

13. Procédé selon la revendication 12, caractérisé en ce que la vitesse d'écoulement de la lame liquide (20) est comprise entre environ 0,3 et 1 m/s.

14. Procédé selon la revendication 12, caractérisé en ce que la vitesse d'écoulement de la lame liquide (20) est comprise entre environ 0,4 et 0,6 m/s.

15. Procédé selon l'une quelconque des revendications 1 à 14, caractérisé en ce que le débit de la lame liquide est compris entre environ 0,2 et 1,5 l/min.cm de largeur de la lame liquide.

16. Procédé selon la revendication 15, caractérisé en ce que le débit de la lame liquide est compris entre environ 0,3 et 1,3 l/min.cm de largeur de la lame liquide.

17. Procédé selon la revendication 15, caractérisé en ce que le débit de la lame liquide est compris entre environ 0,4 et 1 l/min.cm de largeur de la lame liquide.

18. Procédé selon l'une quelconque des revendications 1 à 17, caractérisé en ce que l'angle d'incidence du dispositif à lame liquide (20) par rapport au film (2) est compris entre environ 20 et 80°.

19. Procédé selon l'une quelconque des revendications 1 à 18, caractérisé en ce que la distance comprise entre les lèvres de la filière (1) et l'emplacement auquel la couche uniforme et continue de liquide de refroidissement vient initialement au contact du film (2) est inférieure à 14 cm environ.

20. Film thermoplastique plat monocouche ou multicouche destiné à l'emballage, obtenu par mise en oeuvre du procédé selon l'une quelconque des revendications 1 à 19.

21. Appareil de production d'un film thermoplastique plat monocouche ou multicouche (2) pour l'emballage, comprenant une filière plate d'extrusion (1) et un rouleau de refroidissement (6) ayant un système de refroidissement interne, caractérisé en ce qu'un dispositif (10) à lame liquide est associé au rouleau de refroidissement (6) afin qu'il projette une lame liquide continue et pratiquement uniforme (20) à une vitesse et une température prédéterminées, le dispositif (10) à lame liquide ayant une fente (19) qui a une section réglable (21) de sortie et qui reçoit un liquide à une température et avec un débit prédétermines.

22. Appareil selon la revendication 21, caractérisé en ce que la fente (19) est reliée par des trous d'alimentation (22) à une chambre de régulation (23) qui est elle-même reliée par des trous de distribution (24) à des chambres d'égalisation (25) alimentées en liquide par une pompe (27).

23. Appareil selon la revendication 22, caractérisé en ce que la fente (19) est formée entre deux plaques (32) fixées à une distance prédéterminée à l'aide d'une garniture intermédiaire d'étanchéité en C (33), de blocs (35) de caoutchouc et de boulons (34) pour l'ajustement d'une section frontale (21) d'écoulement de sortie par changement de l'épaisseur de la garniture (33) et de la dimension des blocs (35).

24. Appareil selon la revendication 21, caractérisé en ce que le dispositif (10) à lame liquide est relié pendant le fonctionnement à un dispositif d'ajustement (36 ; 45 ; 53) destiné à ajuster l'angle d'incidence, la distance et la hauteur de la lame liquide (20) par rapport au film (2).

25. Appareil selon la revendication 24, caractérisé en ce que le dispositif (36) d'ajustement d'angle d'incidence comporte deux tourillons latéraux creux (37) solidaires du corps (18) et qui sont montés afin qu'ils tournent dans des manchons (38) ayant une fente (39) dont les lèvres (40) sont serrées par un boulon et des écrous (41, 42).

26. Appareil selon les revendications 24 et 25, caractérisé en ce que le dispositif (45) d'ajustement de distance comporte des coulisseaux (46) fixés chacun à un manchon (38), les coulisseaux (46) étant entraînés de manière coulissante afin qu'ils se rapprochent et s'écartent du film (2) à l'aide de tiges filetées (47) montées afin qu'elles tournent dans des appuis (48, 49) et d'ensembles respectifs à pignon hélicoïdal et vis d'engrenage raccordés à un volant de manoeuvre (52).

27. Appareil selon l'une quelconque des revendications 24 à 26, caractérisé en ce que le dispositif d'ajustement de hauteur (53) comporte des mâchoires latérales (54) sur lesquelles sont fixés les appuis (48, 49), les mâchoires (54) étant montées afin qu'elles puissent tourner dans des tourillons coaxiaux à un arbre (10) du rouleau de refroidissement (6) et étant raccordées pendant le fonctionnement à une transmission à engrenage et moteur (56) par une courroie de transmission (55).

28. Film thermoformable multicouche ayant une épaisseur totale d'au moins 50 µm environ, formé par une couche ou comprenant une couche externe d'épaisseur supérieure à 15 µm environ et constituée d'un matériau très cristallin, caractérisé en ce que la valeur de brume mesurée suivant la norme ASTM D-1003 (méthode A) au milieu de la nappe inférieure de la cavité thermoformée de 180 mm de longueur, 135 mm de largeur et 50 mm de profondeur est inférieure de 20 % environ lorsqu'on la compare à la valeur de brume du film avant thermoformage.

29. Film thermoformable multicouche selon la revendication 28, caractérisé en ce qu'il a une épaisseur totale d'au moins 100 µm.

30. Film thermoformable multicouche selon la revendication 28, caractérisé en ce qu'il a une épaisseur totale d'au moins 150 µm.

31. Film thermoformable multicouche selon la revendication 28, caractérisé en ce que l'épaisseur de la couche externe formée du matériau très cristallin est d'au moins 20 µm environ.

32. Film thermoformable multicouche selon la revendication 28, caractérisé en ce que l'épaisseur de la couche externe formée du matériau très cristallin est d'au moins 25 µm environ.

33. Film thermoformable multicouche selon la revendication 28, caractérisé en ce qu'un matériau très cristallin est présent aussi dans la seconde couche externe.

34. Film thermoformable multicouche selon la revendication 28, caractérisé en ce qu'un matériau très cristallin est aussi présent dans une couche interne.

35. Film thermoformable multicouche selon la revendication 28, caractérisé en ce qu'un matériau très cristallin est aussi présent dans plusieurs couches internes.

36. Film thermoformable multicouche selon la revendication 28, caractérisé en ce que le matériau très cristallin est choisi dans le groupe qui comprend le PP, le HDPE, le LDPE, les copolymères de propylène et les copolymères d'éthylène et d'oléfine α.
